# EUROPÄISCHE PATENTSCHRIFT

(11) **EP 1 015 800 B1**
(45) Veröffentlichungstag und Bekanntmachung des Hinweises auf die Patenterteilung: **05.11.2003**
(21) Anmeldenummer: 98947541.3
(22) Anmeldetag: 21.09.1998
(51) Int. Cl.: F16K 37/00, F16K 31/04

(54) **VERFAHREN UND VORRICHTUNG ZUR ERMITTLUNG DES SCHLIESSPUNKTES EINES VENTILS**
METHOD AND DEVICE FOR DETERMINING A VALVE CLOSURE POINT
PROCEDE ET DISPOSITIF PERMETTANT DE DETERMINER LE POINT DE FERMETURE D'UNE SOUPAPE

(30) Priorität: 24.09.1997 DE 19742098
(43) Veröffentlichungstag der Anmeldung: 05.07.2000
(73) Patentinhaber: HONEYWELL AG, 63067 Offenbach am Main (DE)
(72) Erfinder: EBERT, Volker, D-70771 Leinfelden (DE); MÜLLER, Wolfgang, D-71101 Schönaich (DE); RÜCKLE, Oliver, D-71101 Schönaich (DE)
(74) Vertreter: Leson, Thomas Johannes Alois, Dipl.-Ing.
(86) Internationale Anmeldenummer: EP9806012
(87) Internationale Veröffentlichungsnummer: WO99015822

(56) Entgegenhaltungen:
- DE-C- 19 652 583
- FR-A- 2 182 354
- US-A- 5 487 302
- PATENT ABSTRACTS OF JAPAN vol. 097, no. 003, 31. März 1997 & JP 08 308273 A (TAKEMURA SEISAKUSHO:KK), 22. November 1996

## Beschreibung

Die vorliegende Erfindung bezieht sich auf ein Verfahren zur Ermittlung des Schließpunktes eines Ventils nach dem Gattungsbegriff des Patentanspruches 1 sowie auf eine Vorrichtung zur Durchführung dieses Verfahrens.

In diesem Zusammenhang ist es beispielsweise aus der DE-41 07 860 A1 bereits bekannt, den das Ventil ansteuernden Motor mit konstanter Spannung zu beaufschlagen und den Schließpunkt des Ventils auf Grund des beim Anschlag an dem Ventilsitz erfaßten Stromanstiegs des Motors zu erfassen. Dort wird der Schließpünkt des Ventils unabhängig von den Ventilparametern immer bei der gleichen Schließkraft festgestellt. Ein Ventil mit einer geringen Anfangskraft wird zu stark geschlossen, so daß womöglich der Dichtgummi des Ventils beschädigt wird: Somit sind für verschiedene Ventiltypen konstruktive Maßnahmen erforderlich, beispielsweise durch den Einbau verschieden starker Rutschkupplungen, um Beschädigungen des Ventils zu vermeiden.

Es ist ferner aus der EP 0 050 960 B1 bereits bekannt, die Drehzahl eines Ventilantriebes zu erfassen und aus einem Vergleich der Drehzahl des Motors ohne Last und mit Last eine Entscheidung herzuleiten, ob das einer verringerten Drehzahl zugeordnete erhöhte Drehmoment durch das Anfahren des Schließkörpers gegen einen Ventilsitz oder durch ein sonstiges Hindernis bedingt ist. Die Drehzahl des Motors wird dort nicht geregelt und die Schließstellung wird dort detektiert, wenn die in einem Zähler erfaßten Umdrehungen des Motors nach Digital/Analog-Wandlung einer der Schließstellung zugeordneten Analogspannung entsprechen.

Ausgehend von dem eingangs genannten Stand der Technik ist es daher die Aufgabe der vorliegenden Erfindung, ein Verfahren und eine Vorrichtung zur Ermittlung des Schließpunktes eines Ventils anzugeben, bei dem der Schließpunkt mit der idealen Schließkraft unabhängig von der angetriebenen Masse und der Kraft einer entgegenwirkenden Feder aufgefunden wird.

Die Lösung dieser Aufgabe gelingt gemäß den kennzeichnenden Merkmalen des Patentanspruches 1. Weitere vorteilhafte Ausgestaltungen des erfindungsgemäßen Verfahrens sowie einer Vorrichtung zur Durchführung des Verfahrens ergeben sich aus den abhängigen Ansprüchen.

Anhand der Figuren der beiliegenden Zeichnung sei im folgenden ein Ausführungsbeispiel der Erfindung näher beschrieben. Es zeigen:
Fig. 1 ein Thermostatventil mit einer erfindungsgemäßen Betätigungsvorrichtung;
Fig. 2 ein Flußdiagramm zur Erläuterung des angewendeten erfindungsgemäßen Verfahrens; und
Fig. 3 ein Diagramm zur Erläuterung des erfindungsgemäßen Verfahrens.

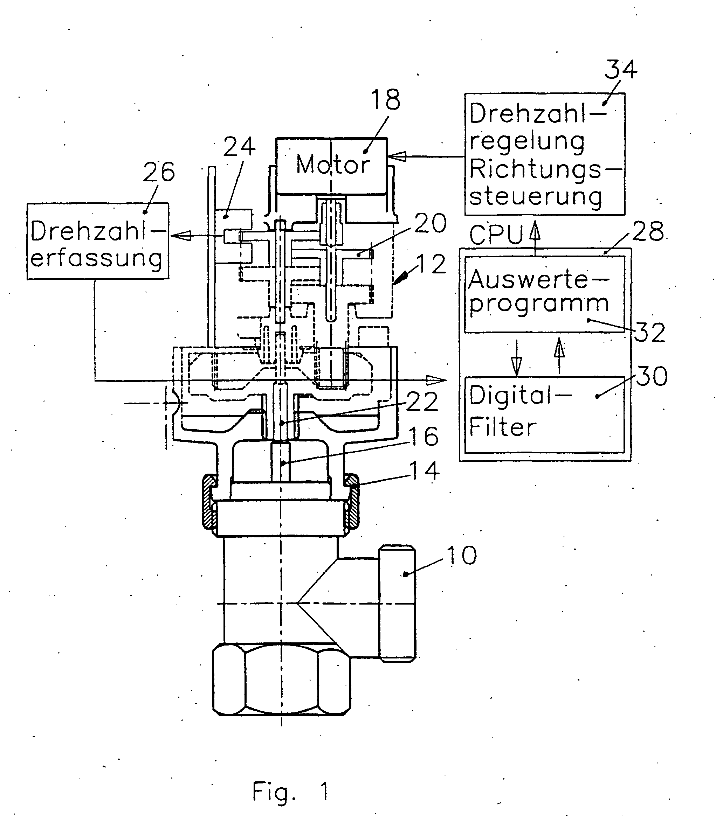

Gemäß Fig. 1 ist auf einem Thermostatventil-Unterteil 10 eine motorische Antriebsvorrichtung 12 mittels einer Überwurfmutter 14 befestigt. Das Ventil-Unterteil 10 ist ein Eckventil, in welchem sich in bekannter Weise ein Ventilsitz befindet, gegen den über einen Stößel 16 ein Schließkörper gegen die Kraft einer Feder verstellbar ist.

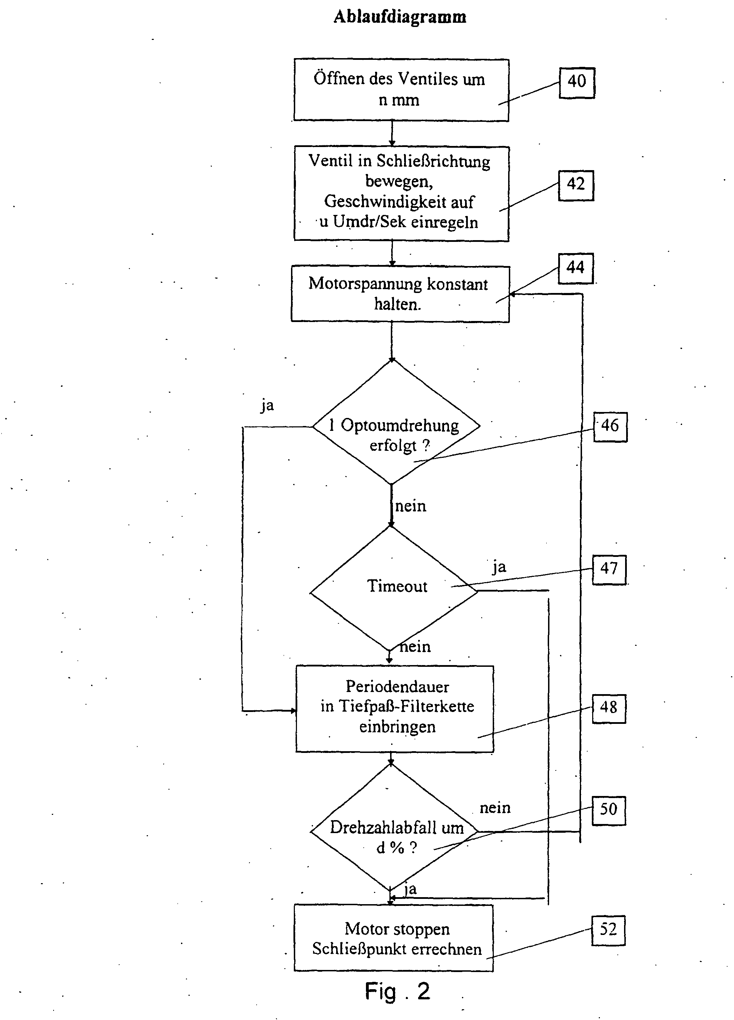

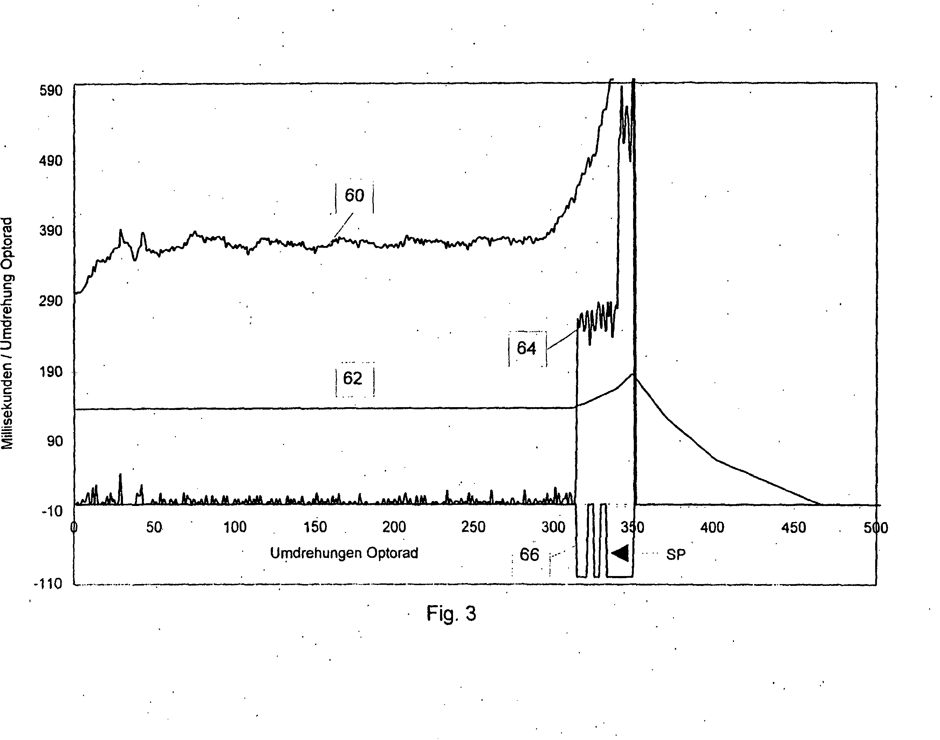

Die Antriebsvorrichtung 12 umfaßt einen ortsfest gelagerten Motor 18, der über seine Motorwelle auf ein Getriebe 20 arbeitet, das einen weiteren Stößel 22 axial verstellt, welcher sich an dem Stößel 16 abstützt. Ein Drehzahlsensor 24 erfaßt im vorliegenden Fall die Umdrehungen eines Zahnrades innerhalb des Getriebes 20 und dementsprechend auch die Umdrehungen der Motorwelle. Der Drehzahlsensor 24 ist vorzugsweise ein Optosensor, kann aber auch magnetisch induktiv oder anderweitig ausgebildet sein, wie dies dem Fachmann bekannt ist. Der Optosensor 24 ist an eine elektronische Drehzahl-Erfassungseinrichtung 26 angeschlossen, deren Signal einer Rechnereinheit CPU-28 zugeführt wird, die vorzugsweise durch einen Mikroprozessor vorgegeben ist. Die Rechnereinheit 28 weist eingangsseitig ein Digitalfilter 30 auf, das hardware- oder softwaremäßig realisiert sein kann und sie steuert mit einem in einem Programmspeicher 32 abgelegten Auswerteprogramm die Auswertung der anfallenden Daten, was anhand der Figuren 2 und 3 näher erläutert wird. Die Rechnereinheit 28 steuert mit ihrem Ausgang einen Motorregler 34, um die Drehzahl und Drehrichtung für den Motor 18 vorzugeben.

Gemäß den Figuren 2 und 3 arbeitet das erfindungsgemäße Verfahren wie folgt: Zunächst wird das Ventil um n mm geöffnet (Block 40), wobei der Weg einem Mindest-Verfahrweg entspricht, da die Anfangsposition unbekannt ist. Sodann wird der Motor so angesteuert (Block 42), daß sich das Ventil in Schließrichtung bewegt, wobei die Schließgeschwindigkeit auf u Umdrehungen pro Sekunde eingeregelt wird. Zu diesem Zweck erfaßt der Optosensor die aktuelle Drehzahl und meldet diese über die Drehzahlerfassungseinrichtung an die Rechnereinheit zurück. Die der konstanten Drehzahl entsprechende Motorspannung wird konstant gehalten (Block 44). Diese konstante Motorspannung weist aber je nach Ventiltyp und Gegenkraft einen unterschiedlichen konstanten Wert auf. Wenn der Optosensor eine Drehung erfaßt (Entscheidungsblock 46) so wird die Periodendauer bzw. die Drehzahlfrequenz einer Tiefpaß-Filterkette zugeführt (Block 48). Wird keine Umdrehung durch den Optosensor erfaßt, so wird geprüft, ob über eine bestimmte Zeitdauer noch Impulse auftreten (Block 47). Ist diese bestimmte Zeitdauer verstrichen, ohne daß Impulse aufgetreten sind, so verzweigt die Routine zu dem Block 52; andernfalls schreitet die Routine zu dem Block 48 weiter. In diesem Block 48 werden die gefilterten Daten zusätzlich differenziert, d.h. es wird die erste Ableitung dieser gefilterten Daten gebildet. Sodann wird geprüft, ob die differenzierten Daten einen vorgegebenen Grenzwert überschreiten, d.h. ob die Drehzahl um d% abgefallen ist (Block 50). Solange dies nicht der Fall ist, wird der Motor mit der konstanten Spannung beaufschlagt. Ist der Grenzwert erreicht, so wird der Motor angehalten und der Schließpunkt errechnet (Block 52). Die Berechnung des Schließpunktes berücksichtigt die letztmalige Überschreitung eines Schwellwertes durch die differenzierten Daten, was durch Bildung der zweiten Ableitung festgestellt wird. Bei klemmenden Ventilen, Verkalkungen usw. kann es vorkommen, daß der Schwellwert mehrmals über- und unterschritten wird. Der berechnete Schließpunkt wird sodann abgespeichert und beim späteren Antrieb des Ventils verwendet. In der gleichen, zuvor beschriebenen Weise kann die vollständig geöffnete Stellung des Ventils an einem Anschlag in Gegenrichtung festgestellt und abgespeichert werden.

Gemäß Figur 3 ist über den Umdrehungen die Periodendauer aufgetragen, wie sie durch den Optosensor ermittelt werden. Dargestellt sind die Rohdaten 60, wobei über den Umdrehungen im Anfahrbereich die Periodendauer zunächst bis zu ihrer Einregelung leicht ansteigt, dann konstant bleibt und schließlich beim Anfahren gegen den Ventilsitz wieder ansteigt. Die durch den Tiefpaß geglätteten Rohdaten werden durch die Kurve 62 repräsentiert. Die erste Ableitung aus den geglätteten Rohdaten führt zu der Kurve 64, wobei jede Änderung der Periodendauer zu einem markanten Sprung führt, wenn die zweite Ableitung gebildet wird (Kurve 66). Aus dieser Kurve 66 wird das Kriterium für den Schließpunkt SP hergeleitet. Der Schließpunkt wird angenommen, wenn in der Kurve 64 ein bestimmter Schwellwert letztmalig überschritten wird, was dem letzten Maximum in der Kurve 66 entspricht.

Kennzeichnend für das vorstehend beschriebene erfindungsgemäße Verfahren ist es, daß bei seiner Anwendung der Schließpunkt immer richtig ermittelt wird, wobei nicht nur die aktuelle Kraft als Kriterium herangezogen wird, sondern auch die Anfangskraft, der Differenzdruck, der statische Druck am Ventilunterteil, die Alterung des Getriebes, die Veränderung der Batteriespannung usw. mit in Betracht gezogen werden.Somit kann z.B. bei verschiedenen Thermostatventil-Unterteilen unabhängig von der Gegenkraft der im Ventil-Unterteil eingebauten Feder der Schließpunkt richtig ermittelt werden.

## Patentansprüche

1. Verfahren zur Ermittlung des Schließpunktes eines Ventils (10), wobei über einen Motor (18), ein Getriebe (20) und eine Spindel (16,22) ein Schließkörper gegen einen Ventilsitz gefahren wird und der Schließpunkt detektiert und für die weitere Steuerung des Ventils abgespeichert wird, **dadurch gekennzeichnet, daß** aus einer Anfangsposition das Ventil geschlossen wird, wobei der Motor auf konstante Drehzahl geregelt wird und daß der Schließpunkt aus einem Drehzahlabfall des Motors um einen vorgebbaren Prozentsatz hergeleitet wird.

2. Verfahren nach Anspruch 1, **dadurch gekennzeichnet, daß** die gemessene Drehzahl einer Tiefpaßfilterung (30) unterzogen wird, die erste Ableitung des gefilterten Signales gebildet wird und der Überschreitung eines Grenzwertes durch die erste Ableitung der Schließpunkt (SP) zugeordnet wird.

3. Verfahren nach Anspruch 2, **dadurch gekennzeichnet, daß** aus der ersten Ableitung des gefilterten Signales die zweite Ableitung gebildet wird und dem letztmaligen Auftreten eines Maximums in der zweiten Ableitung der Schließpunkt zugeordnet wird, in den der Motor aus einer angehaltenen Stellung verfahren wird.

4. Verfahren nach Anspruch 3, **dadurch gekennzeichnet, daß** die Anfangsstellung des Ventils die voll geöffnete Stellung ist, die in gleicher Weise wie die Schließstellung erfaßt wird.

5. Vorrichtung zur Durchführung des Verfahrens nach den Ansprüchen 1 bis 4, mit einer Drehzahlerfassungseinrichtung (24,26) in der Antriebskette zwischen Motor (18) und Ventil (10) und einer Recheneinheit (28), die an die
Drehzahlerfassungseinrichtung (24,26) angeschlossen ist und mit ihrem Ausgang auf eine Drehzahlregeleinrichtung (34) für den Motor (18) einwirkt, wobei die Recheneinheit (28) einen digitalen Tiefpaß (30) aufweist, dem die Drehzahlfrequenz als Roh-Datenstrom zugeführt wird.

## Claims

1. Method for determining the closure point of a valve (10) wherein a stopper is brought against a valve seat by means of a motor (18), gear (20) and spindle (16, 22), and the closure point is detected and stored in memory for further control of the valve, **characterized in that** starting from an initial position the valve is closed with the motor regulated at constant speed and **in that** the closure point is inferred from a fall in the speed of the motor by a specifiable percentage.

2. Method according to Claim 1, **characterized in that** the measured speed is subjected to low-pass filtering (30), the first derivative of the filtered signal is obtained, and the closure point (SP) is assigned to the exceeding of a limit value by the first derivative.

3. Method according to Claim 2, **characterized in that** the second derivative Is obtained from the first derivative of the filtered signal and the closure point to which the motor is run from a stopped position is assigned to the last occurrence of a maximum in the second derivative.

4. Method according to Claim 3, **characterized in that** the initial position of the valve is the fully opened position, which is detected in the same way as the closed position.

5. Device for carrying out the method according to Claims 1 to 4, with a speed-detecting device (24, 26) in the drive line between motor (18) and valve (10) and with a computing unit (28) which is connected to the speed-detecting device (24, 26) and acts via its output on a speed-regulating device (34) for the motor (18), the computing unit (28) having a digital low pass (30) to which the speed frequency is led as a raw datastream.

## Revendications

1. Procédé permettant de déterminer le point de fermeture d'une soupape (10), où un corps de fermeture est conduit contre un siège de soupape par le biais d'un moteur (18), d'un engrenage (20) et d'un arbre (16, 22) et où un point de fermeture est déterminé et sauvegardé pour la distribution ultérieure, **caractérisé en ce que** la soupape est fermée en partant d'une position de départ, où le moteur est réglé à un régime constant, et **en ce que** le point de fermeture est déduit d'une chute de vitesse de rotation du moteur d'un pourcentage déterminable à l'avance.

2. Procédé suivant la revendication 1, **caractérisé en ce que** la vitesse de rotation mesurée est soumise à un filtre passe-bas, **en ce que** la première dérivés du signal filtré est formée et attribuée au dépassement d'une valeur limite par la première dérivée du point de fermeture (SP).

3. Procédé suivant la revendication 2, **caractérisé en ce que** la deuxième dérivée est formée de la première dérivée et **en ce que** le point de fermeture est attribué à la dernière apparition d'un maximum dans la deuxième dérivée, dans lequel le moteur est conduit à partir d'une position arrêtée.

4. Procédé suivant la revendication 3, **caractérisé en ce que** le point de départ de la soupape est la position pleinement ouverte qui est déterminée de la même façon que la position de fermeture.

5. Dispositif pour la mise en oeuvre du procédé suivant l'une des revendications 1 à 4 avec un moyen de détermination de la vitesse de rotation (24, 26) dans la chaîne d'entraînement entre le moteur (18) et la soupape (10) et avec une unité de calcul (28) qui est connectée avec le moyen de détermination de la vitesse de rotation (24, 26) et agit avec sa sortie sur un dispositif de réglage de la vitesse de rotation (34) pour le moteur (18), où l'unité de calcul (28) comprend un filtre passe-bas (30) auquel la fréquence de la vitesse de rotation est livrée en tant que train de données de base.
